Europäisches Patentamt

European Patent Office

Office européen des brevets

(11) Numéro de publication : **0 094 867**
**B1**

(12) **FASCICULE DE BREVET EUROPÉEN**

(45) Date de publication du fascicule du brevet :
09.09.87

(51) Int. Cl.⁴ : **G 06 K 9/22**

(21) Numéro de dépôt : **83400903.7**

(22) Date de dépôt : **05.05.83**

(54) Procédé et dispositif pour la saisie et le traitement de données tracées en clair.

(30) Priorité : **18.05.82 FR 8208634**

(43) Date de publication de la demande :
**23.11.83 Bulletin 83/47**

(45) Mention de la délivrance du brevet :
**09.09.87 Bulletin 87/37**

(84) Etats contractants désignés :
**AT BE CH DE GB IT LI LU NL SE**

(56) Documents cités :
**EP-A- 0 035 036**
**FR-A- 2 457 523**
**US-A- 3 182 291**
**US-A- 4 005 400**
**US-A- 4 141 073**
**US-A- 4 241 409**

(73) Titulaire : **Serina, Dominique**
**1, rue Trétaigne**
**F-75018 Paris (FR)**

(72) Inventeur : **Serina, Dominique**
**1, rue Trétaigne**
**F-75018 Paris (FR)**

(74) Mandataire : **Rataboul, Michel**
**Cabinet Michel Rataboul 69, rue de Richelieu**
**F-75002 Paris (FR)**

Jouve, 18, rue St-Denis, 75001 Paris, France

0 094 867

## Description

On connaît déjà de nombreux procédés et dispositifs permettant la saisie et le traitement de données tracées en clair comme, par exemple les brevets suivants :

Le brevet US-A-4 241 409 qui concerne un dispositif de poche présentant la forme d'un stylo et muni, sur un côté, d'un écran d'affichage. Par des moyens mécaniques qui font l'objet de ce brevet, on traduit les déplacements du dispositif en informations électroniques fournies au calculateur dont la fonction est d'identifier électroniquement les signes tracés à la main. L'écran d'affichage permet à l'usager de contrôler l'exactitude de l'identification électronique.

Le brevet US-A-4 005 400 qui décrit un calculateur auquel les informations sont données non pas en actionnant des touches correspondant individuellement à des caractères significatifs mais en formant à la main le code complexe correspondant à ces caractères.

Il faut rappeler qu'avec les calculateurs classiques, les caractères sont « préfabriqués » et l'on doit avoir une touche par caractère. Il en résulte un rangement des touches en clavier qui prend beaucoup de place.

Selon l'invention de ce brevet, on remplace le clavier par une sorte de matrice que l'on actionne avec un stylet conducteur spécial pour « fabriquer » chaque caractère par éléments successifs. La contrepartie du gain de place est une perte de temps et une complication des manipulations.

Le brevet US-A-4 241 409 qui décrit un dispositif prévoyant de déduire un tracé par la captation des déplacements de pièces mécaniques et la traduction de ces mouvements en signaux électriques (colonne 4, lignes 57 à 59). Ce dispositif nécessite aussi la détection de forces et la mesure d'angles (colonne 4 ligne 59 à colonne 5 ligne 2). Il est clair que ce dispositif ne laisse pratiquement aucune liberté au scripteur qui est contraint de conformer son écriture à une écriture étalon à laquelle le dispositif compare le tracé. Celui-ci, d'ailleurs, pourrait n'être pas visible puisque l'on détecte des mouvements et non le résultat concret de ces mouvements. Les problèmes de contraste, notamment, entre la surface recevant le tracé et le tracé lui-même sont tout à fait étrangers à cette invention.

La demande EP-A-0 035 036 qui décrit une tête de lecture mettant en œuvre des moyens de détection optique de caractères, mais ces moyens prévoient d'appréhender l'ensemble de chaque caractère tracé comme un tout fini, à la manière d'une image ou photographie (page 4 lignes 15 à 17 et 24 à 26). Les moyens optiques, en outre, tiennent compte des directions selon lesquelles sont tracés les différents composants des caractères et l'on décompose chaque caractère en segments, c'est-à-dire en lignes ayant une origine et une arrivée, soit deux points. Enfin, le dispositif comporte un programme mis en mémoire et la reconnaissance des caractères suppose la comparaison entre les algorithmes mémorisés et les informations recueillies lors du tracé (page 7, lignes 5 à 7 et 8 à 25).

Les difficultés d'une reconnaissance globale d'un signe sont si importantes que l'on a pratiquement renoncé aux tracés à la main, de sorte que l'on doit toujours passer par l'intermédiaire d'un codage et/ou d'une normalisation des signes à reconnaître, ce qui est le cas, par exemple, des chiffres d'identification des chèques bancaires.

La présente invention est tout à fait différente de ces procédés et dispositifs connus car elle se caractérise par un système de lecture optique directe, sans aucun intermédiaire mécanique, incorporé à l'instrument et délivré de toute contrainte extérieure telle que support d'écriture spécial, écriture conventionnelle ou standardisée, etc.

Le problème que se propose de résoudre l'invention est donc différent de celui auquel on s'est attaché jusqu'à maintenant puisqu'on ne se heurte pas à la difficulté de la reconnaissance globale d'un signe dont la morphologie exacte et les dimensions sont différentes d'un scripteur à l'autre.

Selon l'invention, au contraire, on analyse optiquement le signe au fur et à mesure qu'il est créé, c'est-à-dire que l'on s'attache au parcours de l'instrument de traçage plus qu'à l'image globale terminée et constituant un tout définitif.

A cette fin, l'invention a pour objet un procédé de lecture du type à détection optique directe pour la saisie et le traitement de données tracées en clair par un instrument à écrire connu en soi sur un support quelconque mais dont l'aspect est contrasté par rapport au tracé, caractérisé en ce que l'on détermine la signification du tracé tant que ce parcours se développe en relevant certains points caractéristiques du tracé déterminés par l'intersection optique de ce tracé et d'au moins l'une de plusieurs lignes de détection et cela autant de fois qu'une intersection se produit, même si la partie intéressée du tracé a déjà été en intersection avec au moins une ligne de détection, que l'on affecte un code dit « individuel » invariable à chaque ligne de détection, que l'on enregistre le code individuel d'une ligne chaque fois que se produit avec elle une intersection optique, que l'on mémorise une suite ou séquence de codes individuels jusqu'à sa fin qui est déterminée par une interruption du tracé pendant un temps supérieur à une durée pré-établie, que l'on affecte un code dit « global » à chaque séquence possible, indépendamment de l'ordre dans lequel se développe le tracé, que l'on introduit chacun des codes globaux successifs dans un calculateur de tout type connu à la fin de leur durée et, enfin, que l'on traduit en clair, visuellement et/ou phonétiquement, le résultat du traitement des codes globaux effectué par le calculateur au moyen d'un programme interne non modifiable commandé par certaines séquences correspondant à des signes intelligibles du tracé.

2

Selon d'autres caractéristiques de ce procédé :

on relève les points caractéristiques du parcours en établissant une trame dont les éléments sensibles sont disposés en lignes radiales et sont codés, et en déplaçant cette trame selon un mouvement lié à celui de l'instrument à écrire ;

on associe l'instrument à écrire et la trame selon une position relative invariable, la partie dudit instrument étant en coïncidence avec un élément neutre de la trame constituant, éventuellement, une origine des éléments codés.

L'invention a également pour objet un dispositif pour la mise en œuvre d'un procédé de lecture du type à détection optique directe pour la saisie et le traitement de données tracées en clair sur un support quelconque mais dont l'aspect est contrasté par rapport au tracé, comprenant un ensemble de détection optique, un transcodeur, un calculateur, un organe de délivrance de résultats, tel qu'un cadran d'affichage et une source d'énergie électrique, caractérisé d'une part en ce que l'ensemble de détection comprend une trame dont les éléments dits « actifs » sont disposés en lignes radiales et sont reliés au transcodeur et, d'autre part, en ce qu'une mémoire de type effaçable, un temporisateur et une horloge sont placés à l'entrée du calculateur, en plus et indépendamment des mémoires habituelles propres à ce calculateur, ledit ensemble de détection au moins étant placé dans un corps de stylo portant un instrument à tracer connu en soi disposé au centre virtuel commun aux lignes radiales.

Selon d'autres caractéristiques de ce dispositif :

il est tout entier placé dans un corps de stylo qui comprend un cadran d'affichage latéral ;

le corps de stylo est associé à un capuchon amovible pouvant être placé soit sur l'une, soit sur l'autre des deux extrémités dudit corps, celui-ci comprenant, sur son extrémité opposée à celle qui porte l'instrument à tracer, des contacts pour au moins une pile placée dans le fond du capuchon amovible ;

l'ensemble de détection comprend une lentille d'extrémité, la trame optiquement co-axiale à la lentille, le transcodeur constitué par un photodétecteur et, de préférence, une source lumineuse devant éclairer le plan de traçage afin d'accroître le contraste entre ledit plan et le tracé.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique avec coupe partielle montrant un dispositif conforme à l'invention réalisé sous la forme d'un stylo.

La figure 2 est une vue schématique en perspective du même dispositif en cours d'utilisation.

La figure 3 est une vue schématique d'une trame équipant un dispositif conforme aux figures 1 et 2 ci-dessus.

La figure 4 montre schématiquement sept étapes du tracé du chiffre « 8 ».

La figure 5 est un schéma général d'un dispositif conforme à l'invention.

La figure 6 est un tableau schématisant le déroulement d'une opération arithmétique.

La figure 7 est une vue en coupe transversale d'un dispositif conforme à l'invention réalisé sous la forme d'un stylo.

La figure 8 est une vue schématique montrant un dispositif conforme à l'invention réalisé sous forme d'un stylo et dont l'instrument de traçage est décentré.

La figure 9 est une vue schématique de face de ce même dispositif.

La figure 10 est une vue schématique d'une trame équipant un stylo conforme aux figures 8 et 9.

En se reportant au dessin, on voit un mode de réalisation de l'invention selon lequel le dispositif a la forme générale d'un stylo comprenant un corps 1 dont une extrémité se termine par une pointe à écrire 2 du genre à bille tandis que l'autre porte deux contacts 3 dont l'utilité sera précisée plus loin.

Le corps 1 peut recevoir un capuchon 4 muni d'une agrafe 5 et pouvant coopérer avec le corps 1 soit par une extrémité soit par l'autre selon tout moyen connu.

La pointe à écrire 2 et son tube à encre capillaire 2a sont placés dans l'axe du corps 1 et y sont assujettis de manière amovible comme cela est connu en soi.

L'extrémité proprement dite du corps 1 où se trouve la pointe à écrire 2, est munie d'une lentille 6 percée en son centre pour ménager un passage à la pointe 2.

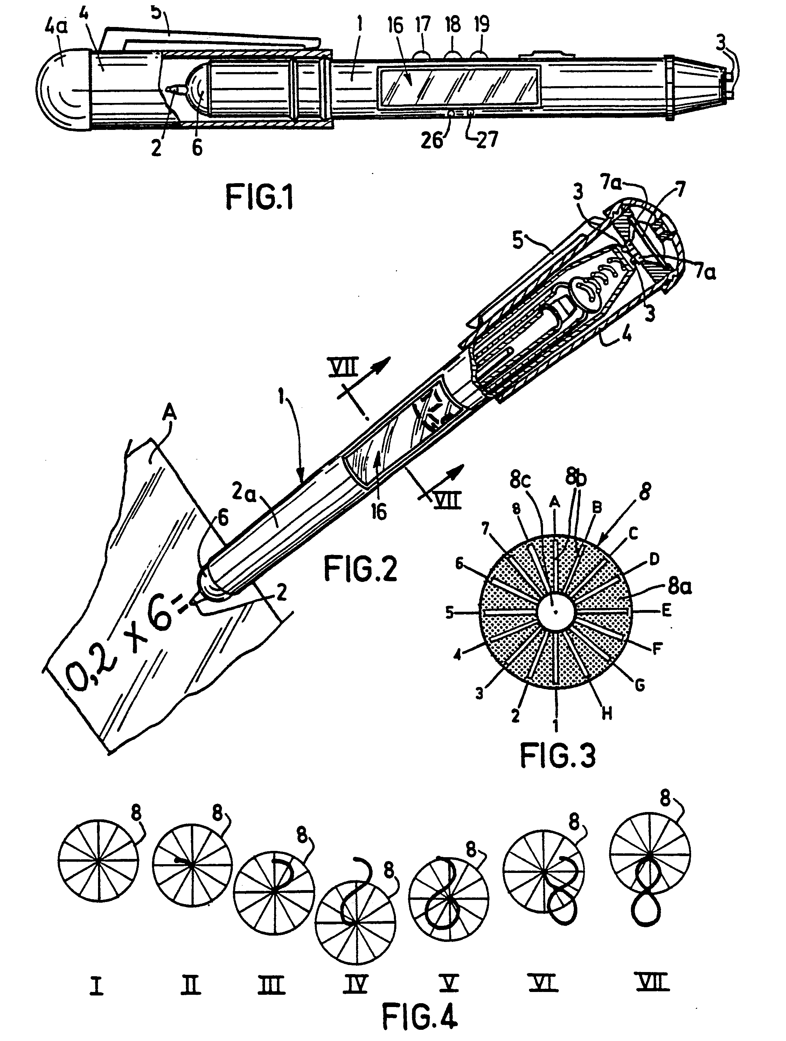

Le capuchon 4 comporte une extrémité amovible 4a obturant un logement dans lequel doit être placée une pile 7 de tout type connu dont les contacts 7a sont destinés à s'appuyer sur les contacts 3 du corps 1 lorsque le capuchon 4 ayant été retiré de sa position de protection de la pointe 2 (fig. 1) a été placé sur l'autre extrémité du corps 1 (fig. 2).

Le dispositif est alors alimenté et peut fonctionner comme on va le décrire maintenant.

Dans l'axe de la lentille 6 et à son voisinage immédiat, se trouve une trame 8 dont le détail sera donné plus loin en regard des figures 3 et 4 et qui est reliée électroniquement à un transcodeur 9 constitué ici d'un photo-détecteur tel qu'une cellule photo-électrique. Celle-ci est reliée électroniquement à un comparateur ou analyseur 10 de tout type connu en soi, relié à un temporisateur à horloge 11 associé à une mémoire effaçable 12.

Cet ensemble est placé et relié à l'entrée d'un calculateur de tout type connu comprenant un décodeur 13 et un microprocesseur à mémoire 14, le tout alimenté à partir de la pile 7.

Enfin, une petite lampe d'éclairage 15 est associée à la lentille 6 afin de projeter un rayon lumineux sur le support A sur lequel l'usager effectue un tracé au moyen de la pointe 2.

Avant de décrire le fonctionnement complet de ce dispositif, on va maintenant décrire la trame 8 en regard de la figure 3.

La trame 8 est constituée d'un disque plein 8a dans lequel sont ménagées des fentes très fines 8b qui rayonnent à partir d'un centre virtuel qui est celui du disque 8a. La partie centrale du disque 8a est occupée par un passage circulaire 8c destiné à la pointe traçante 2.

Pour la clarté de l'exposé, on a affecté à chaque fente 8b un repère attribué dans le sens des aiguilles d'une montre de A à H et de 1 à 8, de sorte que chaque fente diamétrale est désignée par la combinaison d'une lettre et d'un chiffre : A-1, C-3, E-5, etc.

Naturellement, dans la réalité, ces repères n'ont pas de signification et l'on utilise le code binaire pour identifier chaque fente diamétrale ou radiale.

En effet, il peut s'avérer utile soit de prévoir un nombre de fentes plus grand que celui représenté ici et qui est de huit fentes diamétrales ou seize radiales, soit de différencier les deux fentes radiales placées l'une dans le prolongement de l'autre et constituant une fente diamétrale ce qui reviendrait, ici, à appeler 0 l'extrémité de chaque fente située près du centre. Dans ce cas, les lignes seraient désignées ainsi : A-0, B-0, C-0, etc. 1-0, 2-0, 3-0, etc.

Les composants électroniques que l'on a décrit ci-dessus sont organisés de telle manière que l'ensemble est en position neutre, bien que l'ensemble soit alimenté, lorsque le maximum de lumière passe à travers les fentes 8b.

Lorsque l'utilisateur trace sur le support A des chiffres ou des signes, il déplace l'ensemble du dispositif et, notamment, la trame 8 qui en est solidaire, de sorte qu'au fur et à mesure de son tracé, des segments de celui-ci se trouvent en regard des fentes 8b qui, ainsi obscurcies partiellement, influencent le transcodeur (ou photo-détecteur) 9, lequel transmet les impulsions optiques ainsi perçues à l'analyseur 10 qui déduit en code laquelle ou lesquelles fentes 8b se sont trouvées au moins une fois en coïncidence avec une partie du tracé.

Pour illustrer ces dispositions, on a représenté sur la figure 4 sept phases du tracé du chiffre « 8 » et, pour la clarté du dessin, on a schématisé la trame 8 et les fentes 8b par de simples traits.

La phase I correspond au point de départ, c'est-à-dire qu'aucun segment du tracé n'est encore visible.

La phase II représente le début de la première boucle que le scripteur trace ici de gauche à droite.

La phase III représente la fin de la première boucle supposée s'étendre depuis le sommet jusqu'au centre de croisement.

La phase IV représente le tracé de la moitié de la boucle inférieure.

La phase V représente la suite du tracé juste avant le point de croisement.

La phase VI représente à peu près la moitié du tracé de la dernière boucle supérieure.

La phase VII représente la fin du tracé et, ici, cette fin se situe un peu au-dessus du point de départ car ainsi l'a voulu le scripteur.

Ici apparaît une caractéristique de l'invention, à savoir que l'on ne procède pas par analyse globale d'un tracé antérieurement effectué pour le comparer à un ou plusieurs tracés type constituant des échantillons mais, au contraire, on analyse un tracé au fur et à mesure qu'il est créé en retenant la coïncidence de ce tracé avec des lignes repères qui ici sont constituées par les fentes 8b.

Chaque tracé doit, néanmoins, être reconnu pour pouvoir être traité dans le calculateur de sorte que l'on doit, d'abord, affecter un code individuel invariable à chaque fente, puis ensuite constituer des suites types, ou séquences, à chacune desquelles on affecte un code global.

Pour déterminer ces séquences, on a utilisé un procédé statistique qui consiste à faire effectuer un même tracé par un assez grand nombre de personnes, à recueillir les codes individuels par branchement direct sur le transcodeur 9 puis à ne retenir de ces codes individuels que ceux qui sont communs à toutes les personnes.

On a représenté ci-dessous trois exemples énoncés non pas en code binaire mais selon le code « géométrique » utilisé pour la figure 3, et correspondant au tracé des dix chiffres de 1 à 0 :

### Exemple 1

```
1 =  A1 - E5
2 =  E5 - F6 - G7 - H8 - A1 - B2 - C3 - E5 - D4
3 =  E5 - F6 - G7 - H8 - A1 - B2 - C3 - E5 - A1 - B2 - C3 - E5
4 =  E5 - B2 - C3 - E5 - B2 - D4 - C3 - B2 - A1
5 =  A1 - E5 - H8 - G7 - A1 - E5 - C3 - D4 - E5
6 =  E5 - B2 - C3 - H8 - G7 - A1 - E5 - C3 - D4 - E5
7 =  A1 - E5 - F6 - G7 - H8 - A1 - B2 - E5
8 =  E5 - F6 - G7 - H8 - A1 - E5 - B2 - C3 - D4 - E5 - F6 - G7 - H8 - A1 - B2 - C3 - E5 - A1 - H8 - G7 - F6 - E5
9 =  E5 - A1 - H8 - G7 - F6 - E5 - D4 - A1 - B2 - C3 - D4 - E5 - F6
0 =  A1 - B2 - H8 - G7 - F6 - E5 - D4 - C3 - B2 - A1
```

### Exemple 2

```
1 = A1 - E5
2 = H8 - A1 - B2 - C3 - D4 - E5 - F6 - G7 - H8 - B2 - C3 - F6
3 = E5 - F6 - G7 - H8 - A1 - B2 - C3 - E5 - F6 - G7 - H8 - A1 - B2 - C3 - D4
4 = A1 - B2 - E5 - G7 - H8 - F6 - A1
5 = A1 - B2 - E5 - H8 - G7 - F6 - E5 - A1 - B2 - C3 - D4 - E5
6 = A1 - E5 - B2 - C3 - H8 - G7 - F6 - E5 - D4 - C3 - B2 - A1 - H8 - G7 - F6
7 = E5 - F6 - G7 - H8 - A1 - B2 - E5
8 = E5 - F6 - G7 - H8 - A1 - B2 - C3 - D4 - E5 - F6 - G7 - H8 - A1 - B2 - C3 - E5 - D4 - B2 - A1 - H8 - G7 -
    F6 - A1
9 = E5 - A1 - H8 - G7 - F6 - E5 - D4 - C3 - B2 - A1 - A1 - C3 - D4 - F6 - G7
0 = E5 - B2 - C3 - A1 - H8 - G7 - F6 - E5 - D4 - C3 - B2 - A1
```

## Exemple 3

```
1 = A1 - E5
2 = E5 - A1 - B2 - C3 - D4 - E5 - F6 - G7 - H8 - A1 - B2 - C3 - B2 - A1
3 = E5 - A1 - B2 - C3 - D4 - E5 - F6 - G7 - H8 - A1 - B2 - C3 - D4 - E5 - F6 - G7 - H8 - A1 - B2
4 = A1 - E5 - H8 - G7 - F6 - E5 - D4 - C3 - B2 - E5 - F6 - G7 - H8 - A1 - B2 - A1
5 = E5 - H8 - A1 - B2 - C3 - D4 - E5 - F6 - G7
6 = E5 - A1 - B2 - C3 - H8 - G7 - E5 - D4 - C3 - B2 - A1 - H8 - G7 - F6 - E5 - D4 - C3 ⟶ B2
7 = E5 - A1 - H8 - G7 - F6 - A1 - E5
8 = E5 - A1 - B2 - C3 - D4 - E5 - F6 - G7 - H8 - A1 - E5 - H8 - G7 - F6
9 = E5 - A1 - C3 - D4 - A1 - H8 - G7 - F6 - E5 - D4 - C3 - B2 - A1
0 = E5 - A1 - C3 - B2 - H8 - G7 - F6 - E5 - D4 - C3 - B2 - A1 - H8 - G7
```

Après avoir dépouillé le résultat de plusieurs dizaines de ces tracés individuels, on en a tiré des codes communs, ce qui donne, par exemple, la sélection suivante :

```
1  = A1 - E5
2  = A1 - B2 - E5 - D4 (ou A1 - B2 - D4 - E5)
3  = E5 - F6 - G7 - H8 - A1 - B2 - C3
4  = E5 - B2 - E5 - A1
5  = H8 - A1 - C3 - D4 - E5
6  = E5 - B2 - H8 - G7 - C3
7  = E5 - G7 - H8 - A1 - E5
8  = E5 - G7 - E5 - F6 - G7 - H8 - E5
9  = E5 - A1 - H8 - E5 - B2
0  = B2 - H8 - G7 - F6 - E5 - D4 - C3 - B2 - A1
« + » = A1 - E5 - D4 - F6 - C3 - G7 - B2 - H8 - A1 - H8 - B2 - G7 - C3 - F6 - D4 - E5
« — » = E5
« × » = C3 - F6 - G7 - H8 - A1 - D4 - B2 - C3 - D4 - H8 - G7
« ⌐ » = A1 - H8 - G7 - F6 - E5
ou
« : » = A1 - A1
« √ » = A1 - H8 - B2 - C3 - D4 - E5 - F6 - E5 - B2
« , » = B2 - C3
« = » = E5 - C3 - 'B2 - A1 - H8 - G7 - E5
```

Pour que le dispositif enregistre en code binaire les chiffres 1, 2, 3 etc., il faut déterminer chaque séquence correspondante et, par conséquent, déterminer la fin de la série des codes individuels symbolisés ici par les couples lettre - chiffre se rapportant aux fentes 8b.

C'est la fonction du temporisateur 11 qui constate une interruption totale de tracé lorsque la pointe est soulevée du support A pour écrire le chiffre ou le symbole suivant pendant un temps prédéterminé.

D'autre part, les séquences sont déterminées non seulement par la présence des codes individuels mais également par l'ordre dans lequel se présentent ces codes individuels.

Pour le chiffre 2 on a remarqué que celui-ci pouvait donner lieu soit à la série : A1 - B2 - E5 - D4 soit à la série : A1 - B2 - D4 - E5.

L'expérience pourra montrer, peut-être, d'autres alternatives et on en tiendra alors compte dans la programmation du dispositif, cette opération étant à la portée de l'homme de métier.

Chaque séquence en cours de constitution est mémorisée à titre provisoire dans la mémoire 12, puis est ensuite introduite dans le décodeur 13 du calculateur.

Cette opération équivaut exactement à la pression d'une touche de clavier pour une machine à calculer classique utilisant un calculateur de même type.

Lorsqu'au lieu de tracer un chiffre, l'usager trace un signe, celui-ci est codé de la même manière puis est ensuite fourni au calculateur comme si l'utilisateur agissait sur une touche marquée de ce signe avec un clavier traditionnel.

De la sorte, le calculateur travaille à partir des signes tracés comme s'il était commandé avec un clavier.

Il effectue donc les différentes opérations nécessaires avec les chiffres voulus et le résultat est demandé et obtenu lorsque l'utilisateur trace le signe «=» comme on l'a représenté sur la figure 2.

Le corps 1 comporte un cadran 16 de tout type connu, et notamment à cristaux liquides, sur lequel s'affiche le résultat.

On voit ainsi que grâce au procédé et au dispositif conformes à l'invention, il suffit d'écrire les chiffres et les différents signes possibles pour faire travailler le calculateur, puis de tracer le signe «=» pour obtenir immédiatement le résultat qui s'affiche sur le cadran 16.

L'exemple représenté sur la figure 2 consiste à effectuer la multiplication de 0,2 par 6 et le résultat, c'est-à-dire 1,2 apparaît sur le cadran 16 dès que le signe «=» a été tracé.

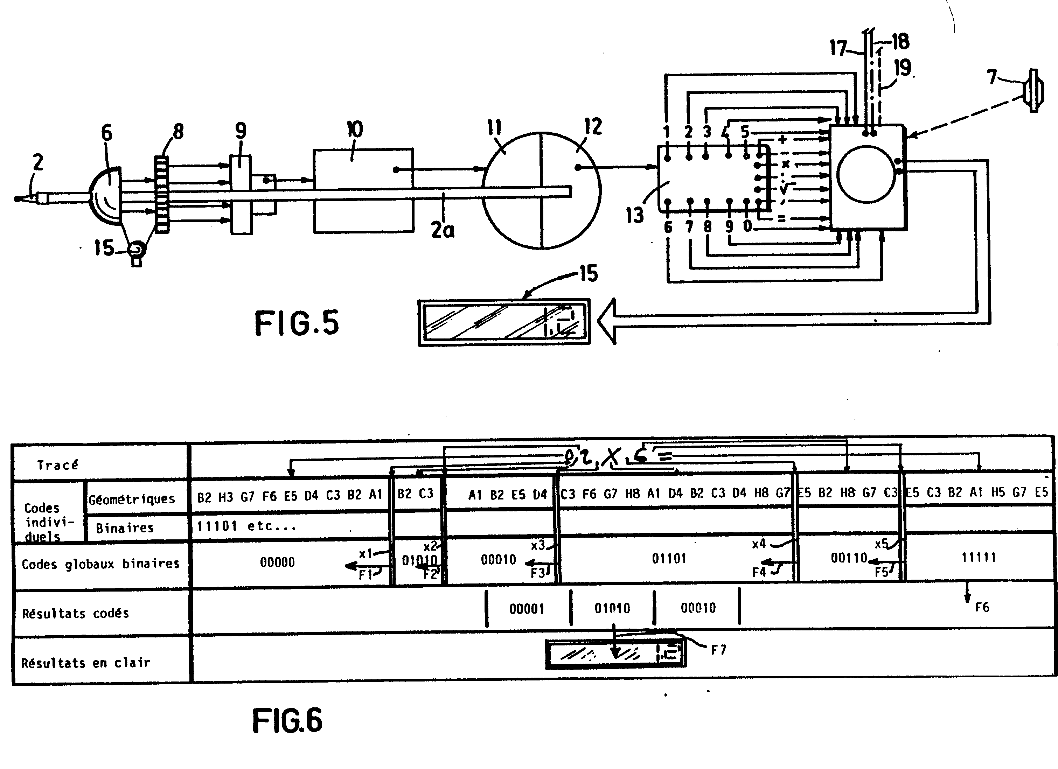

Cet exemple se retrouve sur la figure 6 qui constitue un diagramme développant les différentes opérations effectuées.

Tout d'abord, après lecture optique et transduction en code binaire, la mémoire 12 enregistre les codes individuels correspondant aux fentes 8b et qui correspondent au code « géométrique » de la figure 3 et cela pour le chiffre « 0 ».

Après avoir tracé le chiffre « 0 », l'utilisateur lève la pointe traçante pour écrire la virgule et « l'espace » entre « 0 » et « , » est au moins égal à un temps prédéterminé qui est figuré sur la figure 6 par la colonne x constituant l'origine de la flèche F1 signifiant que cet intervalle de temps a pour effet de transformer la séquence de code binaire individuel en un code binaire global signifiant le chiffre « 0 ».

L'intervalle de temps figuré par la colonne x1 est déterminé par l'horloge du temporisateur 11 et c'est donc à la fin de cet intervalle de temps que se produit le codage global et l'effacement de la mémoire 12 prête, ainsi, à recevoir la séquence suivante.

La même série d'opérations : codage individuel, constatation de la fin de séquence, temporisation et codage global se reproduit pour chacun des signes et des chiffres tracés.

Ainsi, après « 0 » se trouve le signe « , » dont le code global est obtenu à la fin du temps x2 comme le montre la flèche F2.

Ensuite se trouve formé de la même manière le code du chiffre « 2 », puis l'espace de temps x3 correspondant à l'espace entre le chiffre « 2 » et le signe « × », puis le signe « × » dont le code est formé à la fin du temps x4 selon la flèche F4, puis le chiffre « 6 » à la fin du temps x5 selon la flèche F5 puis le signe « = » qui commande le résultat codé comme le fait comprendre la flèche F6 et, instantanément, ce résultat codé commande le cadran 16, comme le symbolise la flèche F7, pour afficher le résultat en clair : « 1, 2 ».

Naturellement, selon le calculateur choisi, on peut effectuer des calculs plus ou moins compliqués depuis les quatre opérations arithmétiques simples jusqu'à des fonctions plus complexes comme cela est bien connu.

Pour obtenir l'effacement du cadran 16 et obtenir une nouvelle disponibilité du calculateur, on peut soit prévoir la commande au moyen d'un tracé tel que « C » ou « CE » selon une normalisation internationale.

On peut, également, prévoir sur le corps 1, deux boutons 17 et 18 correspondant à ces fonctions classiques.

On a également le choix, pour l'obtention du résultat des opérations, entre le codage particulier du signe « = » comme cela a été décrit plus haut et une touche spéciale 19 dite « touche de résultat ».

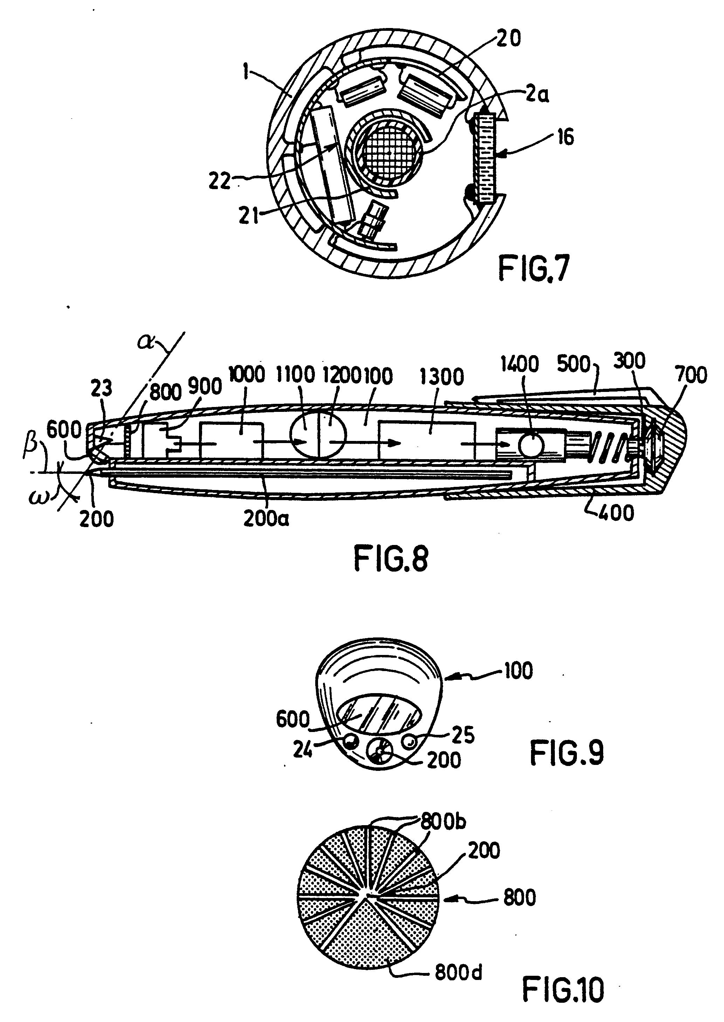

Pour que tous les composants électroniques soient bien protégés, notamment lorsque l'on place et que l'on retire la pointe traçante 2 et la cartouche 2a, on peut prévoir comme cela se voit sur les figures 2 et 7 deux parois courbes concentriques 20 et 21 entre lesquelles sont localisés les composants désignés par la référence générale 22 sur la figure 7.

Les parois 20 et 21 peuvent, notamment, être réalisées sous forme de coquilles en matière synthétique reliées par des entretoises d'écartement (non représentées) pour former un tout solidaire des composants et pouvant être retiré et mis en place aisément.

Sur la figure 8, on a représenté schématiquement un autre mode de réalisation selon lequel l'instrument à tracer n'est pas co-axial au corps du stylo.

Avec ce mode de réalisation, la pointe à tracer 200 et sa cartouche 200a sont placées latéralement, ce qui permet d'utiliser tout l'espace intérieur du corps 100 pour y loger les différents composants électroniques.

Par analogie avec les références des figures précédentes, on a utilisé les mêmes chiffres mais dans l'ordre des centaines.

Avec ces dispositions, la géométrie de l'ensemble de détection optique doit être un peu différente et l'on voit que l'axe α de la lentille 600 fait avec l'axe β de la pointe à écrire 200 un angle ω.

Il est alors nécessaire de prévoir un renvoi des rayons lumineux, ce qui peut être obtenu au moyen d'un prisme 23.

En se reportant à la figure 9, on voit que cette forme particulière du dispositif permet de situer symétriquement, de part et d'autre de la pointe à écrire 200, deux organes d'éclairage 24 et 25 destinés, comme on l'a dit à propos de l'organe 15, à éclairer le plan A sur lequel l'usager effectue son tracé, en vue d'accroître le contraste entre ce plan A et le tracé lui-même.

Avec un mode de réalisation de ce genre, la pointe traçante s'étend en partie sur la trame correspondante 800, ainsi que cela se voit sur la figure 10.

En effet, si l'on désire que la pointe 200 se trouve optiquement à l'aplomb du centre de la trame 800 alors que ces deux éléments ne sont pas concentriques, il faut nécessairement accepter de neutraliser un certain nombre de fentes 800b, ce qui est schématisé par le quartier 800d sur la figure 10.

Il peut s'avérer que ce montage n'ait pas un inconvénient rédhibitoire surtout si le nombre de fentes 800b est relativement grand et procure ainsi une plus grande précision assurant une discrimination des tracés des différents signes et chiffres sans devoir utiliser la partie inférieure de la trame 800.

On a choisi de décrire l'invention en relation avec le tracé de chiffres pour obtenir des opérations arithmétiques.

Mais l'invention permet également d'autres usages qui consistent en une combinaison quelconque d'un tracé et d'un calculateur.

Ainsi, on peut utiliser un dispositif conforme à l'invention pour obtenir une conversion de longueurs en différentes échelles : en faisant parcourir une certaine distance à l'instrument à tracer sur un dessin, on obtient sur le cadran d'affichage une longueur correspondante dans une autre échelle ou en pieds et pouces à partir d'une longueur en centimètres, etc.

On peut également obtenir la lecture de notes de musique écrites sur une portée etc. On peut prévoir des prises 26 et 27 (figure 1) pour relier le dispositif portatif conforme à l'invention à un calculateur de grandes dimensions au moyen d'un câble léger (non représenté).

On peut également, lorsqu'on désire utiliser un ordinateur ou une calculatrice de grandes dimensions, ne prévoir que l'ensemble de détection dans le corps 1 (éléments 10 à 12) tandis que tous les éléments dits « calculateurs » sont dans l'installation fixe.

Lorsque l'on utilise la voie optique, la trame peut, comme on l'a dit, être constituée par un disque plein entaillé de fentes ou, au contraire, être constituée par un réseau opaque laissant subsister des quartiers par lesquels passe la lumière.

Naturellement, l'instrument à tracer peut être de n'importe quel type connu : à bille, à plume, à feutre, etc.

Il peut également s'agir d'un outil procédant par enlèvement ou apport de matière et les informations obtenues peuvent être introduites dans un calculateur qui effectue non plus des opérations arithmétiques mais coopère avec un système d'asservissement ou exploite le résultat à toutes autres fins.

**Revendications**

1. Procédé de lecture du type à détection optique directe pour la saisie et le traitement de données tracées en clair par un instrument à écrire connu en soi sur un support quelconque mais dont l'aspect est contrasté par rapport au tracé, caractérisé en ce que l'on détermine la signification du tracé tant que ce parcours se développe en relevant certains points caractéristiques du tracé déterminés par l'intersection optique de ce tracé et d'au moins l'une de plusieurs lignes de détection et cela autant de fois qu'une intersection se produit, même si la partie intéressée du tracé a déjà été en intersection avec au moins une ligne de détection, que l'on affecte un code dit « individuel » invariable à chaque ligne de détection, que l'on enregistre le code individuel d'une ligne chaque fois que se produit avec elle une intersection optique, que l'on mémorise une suite ou séquence de codes individuels jusqu'à sa fin qui est déterminée par une interruption du tracé pendant un temps supérieur à une durée pré-établie, que l'on affecte un code dit « global » à chaque séquence possible, indépendamment de l'ordre dans lequel se développe le tracé, que l'on introduit chacun des codes globaux successifs dans un calculateur de tout type connu à la fin de leur durée et, enfin, que l'on traduit en clair, visuellement et/ou phonétiquement, le résultat du traitement des codes globaux effectué par le calculateur au moyen d'un programme interne non modifiable commandé par certaines séquences correspondant à des signes intelligibles du tracé.

2. Procédé selon la revendication 1, caractérisé en ce qu'on relève les points caractéristiques du parcours en établissant une trame (8-800) dont les éléments sensibles (8b-800b) sont disposés en lignes radiales et sont codés, et en déplaçant cette trame (8-800) selon un mouvement lié à celui de l'instrument à écrire (2-200).

3. Procédé selon la revendication 2, caractérisé en ce que l'on associe l'instrument à écrire (2-200) et la trame (8-800) selon une position relative invariable, la partie active dudit instrument étant en coïncidence avec un élément neutre de la trame (8-800) constituant, éventuellement, une origine des éléments codés.

4. Dispositif pour la mise en œuvre d'un procédé de lecture du type à détection optique directe pour la saisie et le traitement de données tracées en clair sur un support quelconque mais dont l'aspect est contrasté par rapport au tracé, comprenant un ensemble de détection optique (6-8, 600-800), un transcodeur (9-900), un calculateur (13-14, 1300-1400), un organe de délivrance de résultats, tel qu'un cadran (16) d'affichage et une source d'énergie électrique (7), caractérisé d'une part en ce que l'ensemble de détection comprend une trame (8-800) dont les éléments dits « actifs » (8b-800b) sont disposés en lignes radiales et sont reliés au transcodeur (9-900) et, d'autre part, en ce qu'une mémoire de type effaçable (12-1200), un temporisateur (11-1100) et une horloge sont placés à l'entrée du calculateur (13-14, 1300-1400), en plus et indépendamment des mémoires habituelles (14-1400) propres à ce calculateur, ledit ensemble de détection au moins étant placé dans un corps de stylo (1-100) portant un instrument à tracer (2-200) connu en soi disposé au centre virtuel commun aux lignes radiales (8b-800b).

5. Dispositif selon la revendication 4, caractérisé en ce qu'il est tout entier placé dans un corps de stylo (1-100) qui comprend un cadran d'affichage latéral (16).

6. Dispositif selon la revendication 4, caractérisé en ce que le corps de stylo est associé à un capuchon amovible (4-400) pouvant être placé soit sur l'une, soit sur l'autre des deux extrémités dudit corps, celui-ci comprenant, sur son extrémité opposée à celle qui porte l'instrument à tracer (2-200), des contacts (3-300) pour au moins une pile (7-700) placée dans le fond du capuchon amovible (4-400).

7. Dispositif selon la revendication 4, caractérisé en ce que l'ensemble de détection (6-8, 600-800) comprend une lentille d'extrémité (6-600), la trame (8-800) optiquement co-axiale à la lentille (6-600), le transcodeur constitué par un photodétecteur (9-900) et, de préférence, une source lumineuse (15-24-25) devant éclairer le plan de traçage (A) afin d'accroître le contraste entre ledit plan (A) et le tracé.

## Claims

1. Reading method of the direct optical detection type for the acquisition and processing of data traced in uncoded form by means of a writing instrument known per se on any support of which the appearance is contrasted with respect to the trace, characterised in that the significance of the trace is determined whilst its course is developed, by plotting particular characteristic points of the trace determined by optical intersection of this trace and of at least one of several detection lines, and this as often as an intersection occurs, even if the relevant part of the trace had already been intersected by a detection line, that a so-called « individual » and unchangeable code is allocated to each detection line, that the individual code of a line is recorded every time the same undergoes and optical intersection, that a succession or sequence of individual codes is stored until its completion which is determined by an interruption of the trace during a period exceeding a preset time, that a so-called « overall » code is allocated to each possible sequence, independently of the order in which the trace is generated, that each of the successive overall codes is fed into a computer of any known kind at the end of their period, and finally, that the result of the processing of the overall codes performed by the computer by means of an invariable internal program controlled by particular sequences corresponding to intelligible marks of the trace is translated into uncoded form visually and/or phonetically.

2. Method according to claim 1, characterised in that the characteristic points of the trajectory are plotted by establishing a screen or frame (8-800) of which the sensor elements (8b-800b) are arranged in radial lines and are coded, and by displacing this frame (8-800) according to a movement related to that of the writing instrument (2-200).

3. Method according to claim 2, characterised in that the writing instrument (2-200) and the screen or frame (8-800) are associated in an invariable relative position, the active section of the said instrument being coincident with a neutral element of the frame (8-800), possibly forming an origin for the coded elements.

4. Device for carrying out a reading method of the direct optical detection type, for acquisition and processing of data traced in clear on a carrier which may be of any kind but of which the appearance is contrasted with respect to the trace, comprising an optical detection assembly (6-8, 600-800), a transcoder (9-900), a computer (13-14, 1300-1400), a member for supplying the results, such as a display dial (16), and a source of electrical power (7), characterised on the one hand in that the detection assembly comprises a screen or frame (8-800) of which the so-called « active » elements (8b-800b) are arranged in radial lines and are connected to the transcoder (9-900), and on the other hand, in that a memory (12-1200) of the erasable type, a time-delay means (11-1100) and a clock are situated at the input of the computer (13-14, 1300-1400) additional to and independently of the conventional memories (14-1400) intrinsic to this computer, at least the said detection assembly being installed in a stylus element (1-100) carrying a tracing instrument (2-200) known per se and situated at the virtual centre common to the radial lines (8b-800b).

5. Device according to claim 4, characterised in that it is wholly incorporated in stylus element (1-100) which comprises a lateral display dial (16).

6. Device according to claim 4, characterised in that the stylus element is associated with a removable cap (4-400) which may be placed on one or the other of the two extremities of the said element, the latter comprising, on its opposite extremity to that carrying the tracing instrument (2-200), contacts (3-300) for at least one cell (7-700) situated in the bottom of the removable cap (4-400).

7. Device according to claim 4, characterised in that the detection assembly (6-8, 600-800) comprises an end lens (6-600), the dial (8-800) which is optically coa-axial with the lens (6-600), the transcoder formed by a photodetector (9-900) and preferably a light source (15-24-25) intended to illuminate the tracing plane (A) in order to increase the contrast between the said plane (A) and the trace.

**Patentansprüche**

1. Leseverfahren mit direkter optischer Detektion für die Erfassung und Behandlung von mit einem an sich bekannten Schreibgerät geschriebenen Daten auf beliebigem Untergrund, der sich vom Schriftbild abhebt, dadurch gekennzeichnet, daß die Bedeutung der Linien erfaßt wird, während sich der Schriftzug entwickelt, indem bestimmte charackterische Punkte der Schriftlinien aufgenommen werden, die durch die optische Kreuzung dieser Linien und mindestens einer von mehreren Erfassungslinien bestimmt sind und die, so oft, wie ein Schneiden dieser Linien vorkommt, selbst wenn der interessierende Teil der Schriftlinie sich schon mindestens mit einer Erfassungslinie geschnitten hat, wobei ein unveränderbarer « individueller » Code jeder Erfassungslinie zugeordnet wird und der individuelle Code einer Linie jedesmal registriert wird, wenn ein optisches Schneiden dieser Linie erfolgt und anschließend eine Reihe oder Sequenz individueller Codes bis zum Ende Gespeichert wird, was durch eine Unterbrechung der Schriftlinie für ein vorbestimmtes Zeitintervall bestimmt ist und ein « globaler » Code jeder möglichen Sequenz zugeordnet wird, unabhängig von der Ordnung, in der sich die Schriftlinie entwickelt und wobei jeder der aufeinanderfolgenden globalen Codes einem Rechner bekannten Typs am Ende ihrer Dauer eingegeben wird und schließlich visiuell und/oder phonetisch das Ergebnis der Behandlung der globalen Codes übersetzt wird, wobei die Codes vom Rechner mittels eines nicht änderbaren internen Programms, das durch bestimmte Sequenzen gesteuert wird, die lesbaren Zeichen der Schriftlinie entsprechen, behandelt werden.

2. Verfahren nach Anspruch 1, dadurch gekennzeichnet, daß die charakteristischen Punkte des Schriftzuges entnommen werden, indem ein Raster (8-800) gebildet wird, dessen empfindliche Elemente (8b-800b) in radialen Linien angeordnet und codiert sind und indem dieses Raster (8-800) gemäß einer Bewegung verschoben wird, die mit der Bewegung des Schreibinstruments (2-200) verbunden ist.

3. Verfahren nach Anspruch 2, dadurch gekennzeichnet, daß das Schreibinstrument (2-200) und das Raster (8-800) unbeweglich gegeneinander angeordnet werden, wobei der aktive Teil des Instruments mit einem neutralen Element des Rasters (8-800) zusammenfällt, das gegebenenfalls einen Beginn codierter Elemente bildet.

4. Vorrichtung zur Durchführung des Leseverfahrens mit direkter optischer Detektion für die Erfassung und Behandlung geschriebener Daten auf einen beliebigen Träger, dessen Erscheinung bezüglich der Schriftlinie kontrastiert, mit einer optischen Detektionseinheit (6-8, 600-800), einem Transcodierer (9-900), einem Rechner (13-14, 1300-1400), einem Organ zum Liefern der Ergebnisse, wie z. B. einer optischen Anzeige (16) und einer elektrischen Energiequelle (7), dadurch gekennzeichnet, daß einerseits die Detektionseinheit ein Raster (8-800) aufweist, dessen « aktiv » genannte Elemente (8b-800b) in radialen Linien angeordnet und mit dem Transcodierer (9-900) verbunden sind und andererseits dadurch, daß ein löschbarer Speicher (12-1200), ein Verzögerer (11-1100) und ein Taktgeber am Eingang des Rechners (13-14, 1300-1400) angeordnet sind und darüber hinaus und unabhängig von den üblichen Speichern (14-1400) des Rechners, mindestens die Erfassungseinheit im Schreiberkörper (1-100) angeordnet ist, der ein an sich bekanntes Schreibgerät (2-200) trägt, das in der virtuellen Mitte angeordnet ist, die den Radiallinien (8b-800b) gemeinsam ist.

5. Vorrichtung nach Anspruch 4, dadurch gekennzeichnet, daß sie vollständig im Schreiberkörper (1-100) angeordnet ist, der eine seitliche Anzeigefläche (16) aufweist.

6. Vorrichtung nach Anspruch 4, dadurch gekennzeichnet, daß der Schreiberkörper mit einer abnehmbaren Kappe (4-400) verbunden ist, die auf das eine oder andere Ende des Körpers gesteckt werden kann, und die an dem Ende, das dem Schreibgerät (2-200) gegenüberliegt, Kontakte (3-300) für mindestens eine Batterie (7-700) aufweist, die im Boden der abnehmbaren Kappe (4-400) untergebracht ist.

7. Vorrichtung nach Anspruch 4, dadurch gekennzeichnet, daß die Detektionseinheit (6-8, 600-800) eine Endlinse (6-600) aufweist und das ein optisch koaxial zur Linse (6-600) angeordnetes Raster (8-800) und der Transcodierer, der aus einem Fotodetektor (9-900) besteht und vorzugsweise eine Lichtquelle (15-24-25) zum Beleuchten der Schreibebene (A), um den Kontrast zwischen der Ebene (A) und der Schrift zu vergrößern, vorgesehen sind.

0 094 867

FIG.1

FIG.2

FIG.3

FIG.4

## FIG.5

## FIG.6

| Tracé | | *2,X,5=* | | | | | |
|---|---|---|---|---|---|---|---|
| Codes individuels | Géométriques | B2 H3 G7 F6 E5 D4 C3 B2 A1 | B2 C3 | A1 B2 E5 D4 | C3 F6 G7 H8 A1 D4 B2 C3 D4 H8 G7 | E5 B2 H8 G7 C3 | E5 C3 B2 A1 H5 G7 E5 |
| | Binaires | 11101 etc... | | | | | |
| Codes globaux binaires | | 00000 (x1, F1) | 01010 (x2, F2) | 00010 (x3, F3) | 01101 (x4, F4) | 00110 (x5, F5) | 11111 |
| Résultats codés | | | 00001 | 01010 | 00010 | | F6 |
| Résultats en clair | | | | F7 | | | |

FIG.7

FIG.8

FIG.9

FIG.10